# EUROPÄISCHE PATENTSCHRIFT

(11) **EP 1 896 733 B1**
(45) Veröffentlichungstag und Bekanntmachung des Hinweises auf die Patenterteilung: **10.03.2010**
(21) Anmeldenummer: 06723504.4
(22) Anmeldetag: 17.03.2006
(51) Int. Cl.: F16B 19/00

(54) **BEFESTIGUNGSHÜLSE**
FASTENING SLEEVE
MANCHON DE FIXATION

(30) Priorität: 30.06.2005 DE 102005030435
(43) Veröffentlichungstag der Anmeldung: 12.03.2008
(73) Patentinhaber: William Prym GmbH & Co. KG, 52224 Stolberg (DE)
(72) Erfinder: SCHMITZ, Frank, 52391 Vettweiss (DE)
(74) Vertreter: Mentzel, Norbert
(86) Internationale Anmeldenummer: PCT/EP2006/002460
(87) Internationale Veröffentlichungsnummer: WO 2007/003235

(56) Entgegenhaltungen:
- DE-A1- 3 212 160
- DE-A1- 10 143 866
- GB-A- 974 115
- US-A- 4 461 116

## Beschreibung

Die Erfindung richtet sich auf eine Befestigungshülse, die im Gebrauchsfall zu Befestigungszwecken in eine Bohrung eines oder mehrerer Körper eingeführt wird.

Es gibt aus der DE 19 41 398 B2 ersichtliche Spiralstifte, die mehrlagig gewickelt sind und einen Spiralquerschnitt aufweisen. Wegen der Flächenreibung zwischen den einzelnen Lagen ist es schwer die Spiralstifte radial zu verformen. Dies gilt auch, wenn gemäß DE 37 33 126 A1 in der äußersten Lage des Spiralstifts radial federnde Zungen eingeschnitten sind, die im Gebrauchsfall mit der Bohrungswand zusammenwirken.

Eine bessere radiale Federung weisen Spannhülsen gemäß der US 2,240,425 A auf, die einlagig ausgebildet sind, einen durchgehenden Hülsen-Längsschlitz aufweisen und daher einen C-Querschnitt besitzen. Wenn diese Spannhülsen in eine Bohrung eingeführt sind, dürfen sich die den Längsschlitz beidseitig begrenzenden Kanten nicht berühren, weil sonst die radiale Federung verloren geht. Um die Verdrehungssicherheit der in die Bohrung eingeführten Hülse zu verbessern, ist es aus der DE 18 51 811 U bekannt, in der Umfangsfläche der Spannhülse Narben einzuformen. Diese Narben begründen keine Federelastizität der Spannhülse.

Um aus Holz bestehende Körper miteinander zu verbinden, ist es aus der US 1,354,549 A bekannt, U-förmige Einschnitte in den Hülsenmantel einzubringen, wodurch radial nach außen weisende Zungen entsteht. Diese Spannhülsen werden in zwei fluchtende Bohrungen dieser Holzkörper je zur Hälfte eingeführt. Zur besseren Befestigung dieser Holzkörper sind die Zungen in dem einen Abschnitt der Hülse gegensinnig zu denjenigen des anderen Abschnitts orientiert. Ausweislich der US 3,352,191 A können die Zungen ein zugespitztes dreieckförmiges Profil aufweisen. Gemäß der DE 32 29 207 C2 oder der FR 2 697 301 A1 können die Zungen verkröpft sein und bereichsweise auch ins Zylinderinnere der Hülse hineinragen. Nach ihrer Einführung stützen sich lediglich die Zungen dieser Hülsen an der Bohrung ab. Es gibt keine vollflächige Anlage der Hülse an der Bohrung.

Letzteres gilt auch für die aus der GB 974 115 A ersichtlichen Hülse, die zur Verbindung zweier Rohre genutzt wird. Es sind stellenweise federnde Zungen aus dem Hülsenmantel herausgeschnitten, die im Gebrauchsfall federnd mit der Rohrinnenfläche zusammenwirken. Eine Federelastizität der Hülse selbst wird dabei nicht genutzt.

Die DE 101 43 866 A1 zeigt eine Kunststoff-Injektions-Dübelhülse, die keinen Längsschlitz aufweist. Der ganze Umfang der Dübelhülse ist mit Laschen versehen, die an ihren Innenflächen radial ins Hülseninnere hineinragende Rippen besitzen. Nach dem Einsetzen der Dübelhülse in ein Dübelloch wird ein Bolzen ins Hülseninnere eingeführt, der auf die Rippen trifft und dadurch die Laschen radial nach außen spreizt. Dadurch dringen die Laschen in den Mörtel ein und verankern die Hülse im Dübelloch. Vor Gebrauch gibt es wegen der Rippen bei dieser Dübelhülse radial nach innen ragende Vorsprünge und nach dem Einschieben des Bolzens ins Hülseninnere radial nach außen weisende Vorsprünge. Eine Ausnutzung von Umfangskräften in der Hülse findet hier nicht statt.

Aus der US-A 4,461,116 ist eine in sich ringförmig geschlossene Hülse zur Verbindung von zwei mit Bohrungen versehenen Körpern bekannt, die keinen Längsschlitz hat und daher keine in der Mantelfläche wirkende Umfangskräfte in der Hülse erzeugen kann. An zueinander diametral gegenüberliegenden Seiten besitzt diese Hülse ein Langloch, welches mit zwei Ausschnitten an den beiden Hülsenenden ausgerichtet ist. Vertikal zur Verbindungslinie der beiden Langlöcher sind in der Hülsenmitte an der äußeren Mantelfläche zwei zueinander gegensinnig orientierte keilförmige Vorsprünge angeordnet, die im Gebrauchsfall die Hülse in der Hülsenmitte radial eindrücken. Dabei verengt sich das Langloch in seiner Lochmitte, während die Ausschnitte an den beiden Hülsenenden sich auszuweiten suchen. Diese bekannte Hülse verformt sich zwischen der Hülsenmitte einerseits und den beiden Hülsenenden andererseits nach einem Hebelprinzip.

Aus der DE 32 12 160 A1 ist ein Verbindungselement mit Clipswirkung bekannt, welches radial aus der Mantelfläche herausragende, in sich verkröpfte federnde Zungen besitzt. Zur Steckeinführung des Verbindungselements besitzen die Zungen leicht ansteigende Führungsschrägen an der einen Seite und steil abfallende Klemmschrägen auf der gegenüberliegenden Seite. Das Verbindungselement dient zum Zusammenhalten flächiger Bauteile, die miteinander fluchtende Durchbrüche aufweisen. Nach dem Einstecken des Verbindungselements in die Durchbrüche der flächigen Bauelemente schnappen die Klemmschrägen der federnden Zungen auf der Austrittsseite des Verbindungselements radial heraus, während ein als Flansch ausgebildeter Kopfteil des Verbindungselements sich an der Eintrittsseite abstützt. Dadurch drückt das Verbindungselement die beiden Bauelemente axialen zusammen. Abgesehen von den radialen Zungen gibt es keine, in Umfangsrichtung weisenden Kräfte in der Hülse.

Aus der DE 962 483 C2 ist eine Hülse mit einem Längsschlitz bekannt. Im Gebrauchsfall stützen sich die Schlitzkanten aneinander ab und erzeugen in Umfangsrichtung des Hülsenmantels verlaufende Kräfte. Die Hülse ist radial elastisch, weil einzelne Längssegmente des Hülsenmantels mit zweischenkeligen, ins Hülseninnere ragenden Profilschenkeln versehen sind. Wenn sich der Längsschlitz beim Eintreiben der Hülse in die Bohrung schließt, können die beiden Schenkel gegeneinander federn. Wenn sich aber auch die Schenkel berühren, geht die radiale Verformbarkeit der Hülse verloren. Ein weiterer Nachteil dieser Hülse ist der verhältnismäßig hohe Materialaufwand zur Ausbildung der federnden Schenkel im Zylinderinneren der Hülse.

Aus der DE 43 35 471 A1 ist es bekannt, eine Zentrierbuchse als Drehteil auszubilden, dessen Umfangsfläche ein Längsprofil mit stellenweisen konvexen Vorsprüngen aufweist, die einen größeren Außendurchmesser in der Zentrierbuchse erzeugen. Ein axial durchgehender Längsschlitz fehlt. Stattdessen gibt es ein oder zwei axial begrenzte Schlitze, die in Umfangsrichtung der Zentrierbuchse exakt ausgerichtet sind und im gleichen Längsabschnitt der Buchse liegen. Die Hülsenwand zwischen zwei benachbarten radialen Vorsprüngen soll wie eine beidseitig eingespannte Feder wirken und im Gebrauchsfall die Buchse radial verformen.

Der Erfindung liegt die Aufgabe zugrunde, eine Befestigungshülse zu entwickeln, die sich preiswert herstellen lässt und ihre radiale Verformbarkeit auch dann beibehält, wenn die beiden den Längsschlitz zwischen sich schließende Schlitzkanten sich aneinander abstützen. Dies wird erfindungsgemäß durch die im Anspruch 1 angeführten Maßnahmen erreicht, denen folgende besondere Bedeutung zukommt.

Durch das Lochfeld aus mindestens zwei zueinander parallelen und zugleich längsversetzten Reihen von Durchbrüchen erhält der Hülsenmantel einen besonderen Aufbau. Es entstehen einerseits durchlaufende Längsstege zwischen benachbarten Lochreihen, die quer zu den Umfangskräften orientiert sind. Andererseits besitzt der Hülsenmantel Querstege zwischen aufeinanderfolgenden Durchbrüchen in jeder der beiden Lochreihen, die in Richtung der Umfangskräfte verlaufen und am Durchbruch der benachbarten Lochreihe enden.

Im Gebrauchsfall zeichnet sich die Hülse durch besondere Wirkungen aus. Die Längsstege werden innerhalb des Hülsenmantels auf Kosten der lichten Weite der Durchbrüche verformt. Im Gebrauchsfall nähern sich die in Umfangsrichtung gegenüberliegenden Kanten der Durchbrüche aneinander, welche von den Längsstegen im Hülsenmantel begrenzt sind. Die Querstege dagegen bleiben unverformt. Bei wachsender radialer Verformung der Hülse tritt ein zunehmend S-förmiger Verlauf der Längsstege innerhalb des Zylindermantels ein. Durch diese Verformung der Längsstege ist das Lochfeld in sich federelastisch und erzeugt die Umfangskräfte. Das Lochfeld fungiert als "Federsegment", welches sich nur innerhalb des schmalen Ringquerschnitts des zylindrischen Hülsenmantels verformt. Dieser Ringquerschnitt wird von der Blechdicke des Materials bestimmt, aus welchem die Befestigungshülse geformt wird. Der Hülsenmantel hat eine konstante Mantelstärke, weil sowohl die innere als auch die äußere Mantelfläche frei von radialen Vorsprüngen ist.

Neben dem Federsegment besitzt die Hülse wenigstens ein in Umfangsrichtung unelastisches Längssegment, welches keine Durchbrüche besitzt und als "Festsegment" in der Hülse fungiert. Im Gebrauchsfall der Hülse nimmt das Festsegment die vom Federsegment kommenden Umfangskräfte auf und erzeugt radial nach außen wirkende Spannkräfte, die auf die Innenfläche der Bohrung wirken. Die Festsegmente und Federsegmente sorgen im Gebrauchsfall für eine vollflächige Anlage der Hülse an der Innenfläche der Bohrung. Radiale Zungen, um wenigstens stellenweise radiale Kräfte auf die Bohrung auszuüben, sind nicht nötig. Das aus den Durchbrüchen herausgeschnittene Material kann bei der erfindungsgemäßen Hülse zum Aufbau einer weiteren Hülse verwendet werden.

Bedeutungsvoll ist, dass das Zylinderinnere der Hülse frei ist und zwar auch im Einführfall, wenn die Hülse in der Bohrung steckt. Dadurch kann das Zylinderinnere als Steckaufnahme für einen Schaft dienen. Ein solcher Schaft kann z.B. in Form einer Schraube als zusätzliches Befestigungsmittel zwischen zwei Körpern dienen.

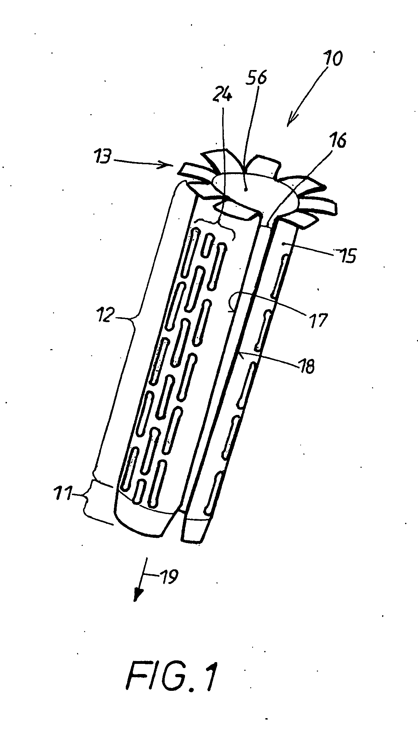

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Ein erstes Ausführungsbeispiel ist in den Figuren 1 bis 8b in verschiedenen Ansichten, Maßstäben und Verfahrensstufen dargestellt, es zeigen:
- Fig. 1: eine vergrößerte perspektivische Darstellung der erfindungsgemäßen Befestigungshülse,
- Fig. 2 bis 5: eine Vorderansicht, eine Seitenansicht und eine Rückansicht gemäß den in Fig. 5 verdeutlichten Blickrichtungen II, III und IV und eine Draufsicht in Blickrichtung V von Fig. 2.

Um die besondere Wirkung der erfindungsgemäßen Befestigungshülse zu veranschaulichen, zeigen
- Fig. 6a,: in starker Vergrößerung, einen schematischen Querschnitt durch die Hülse längs der Schnittlinie VIa - VIa von Fig. 2, wobei die elastische Wirkung eines Lochfeldes in zwei Längssegmenten der Hülse durch ein Federsymbol schematisiert ist und
- Fig.6b: in analoger Querschnittsdarstellung den Einführungsfall der Hülse, wenn sie sich im Inneren einer Bohrung eines zu befestigenden Körpers befindet.

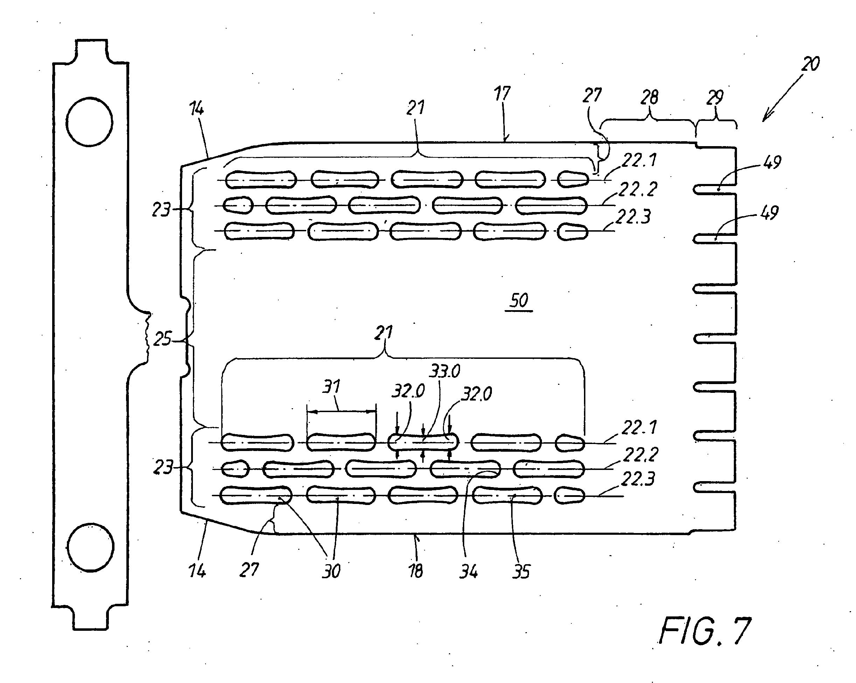

Die weiteren Fig. 7 bis 8b des ersten Ausführungsbeispiels zeigen verschiedene Herstellungsphasen und Gebrauchsphasen dieser Hülse, nämlich
- Fig. 7: die Draufsicht auf ein Stanz-Zwischenprodukt der erfindungsgemäßen Hülse, bevor der Blechzuschnitt durch mehrere Formvorgänge das aus Fig. 1 ersichtliche Hülsen- Endprodukt erzeugt,

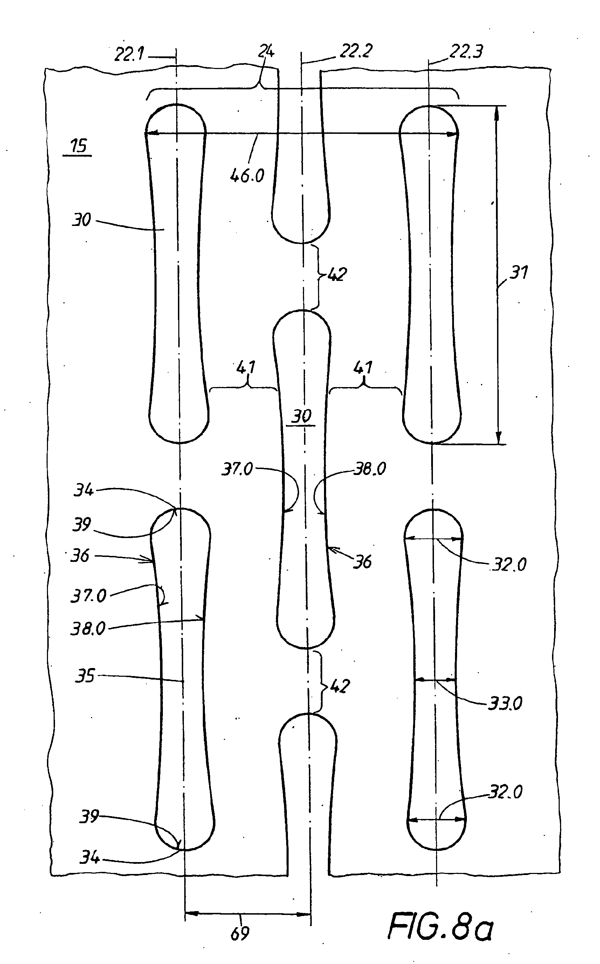

- Fig. 8a,: in starker Vergrößerung, ein Teilstück einer ebenen Abwicklung des in Fig. 1 gezeigten Hülsenmantels im Bereich eines eine Schar von Durchbrüchen aufweisenden Längssegment der Hülse, wenn die Hülse entspannt ist und sich im Ruhefall befindet und

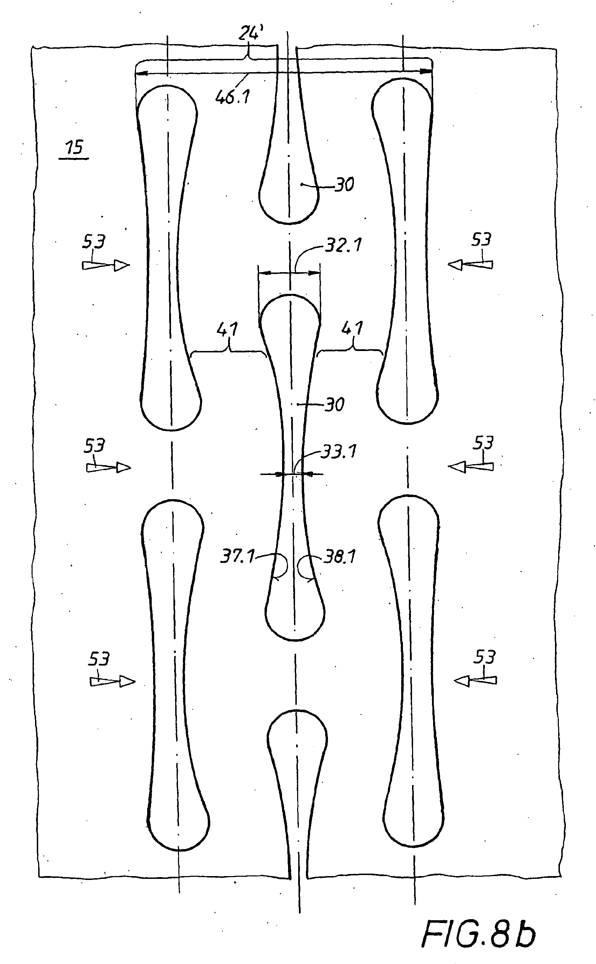

- Fig. 8b: den gleichen Abschnitt, wenn der Einführfall vorliegt, wo die Hülse in eine Bohrungeines Körpers eingesteckt worden ist.

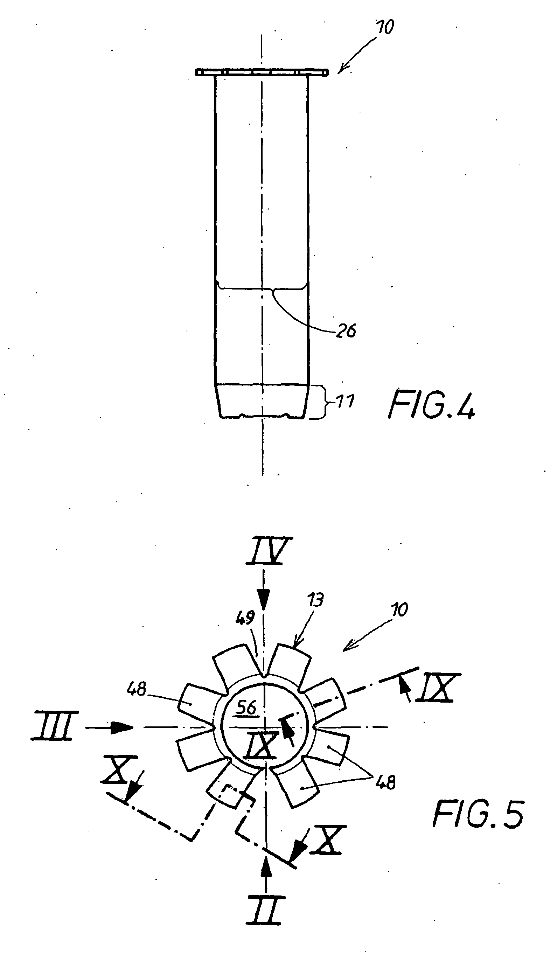

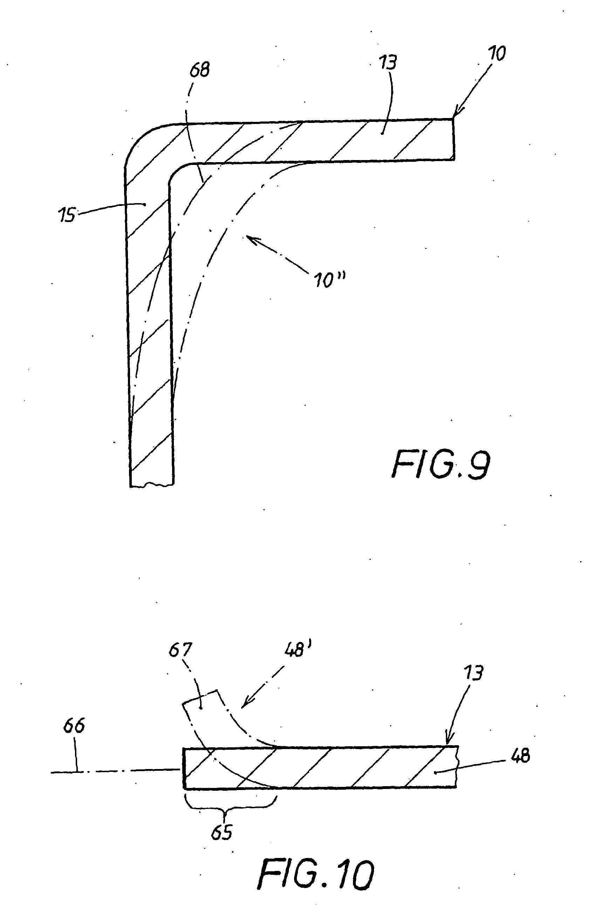

Weitere Ausführungsbeispiele der erfindungsgemäßen Befestigungshülse sind in den Fig. 9 und 10 gezeigt, nämlich
- Fig. 9,: in starker Vergrößerung ein Bruchstück der Hülse von Fig. 5 längs der Schnittlinie IX - IX, wo die alternative Ausbildung in Form einer Sicke strichpunktiert veranschaulicht ist, und
- Fig. 10,: ebenfalls in starker Vergrößerung, einen Teilschnitt durch einen Lappen eines am Hülsenende vorgesehenen Flansches gemäß der Schnittlinie X - X von Fig. 5, wobei die Alternative ebenfalls strichpunktiert veranschaulicht ist.

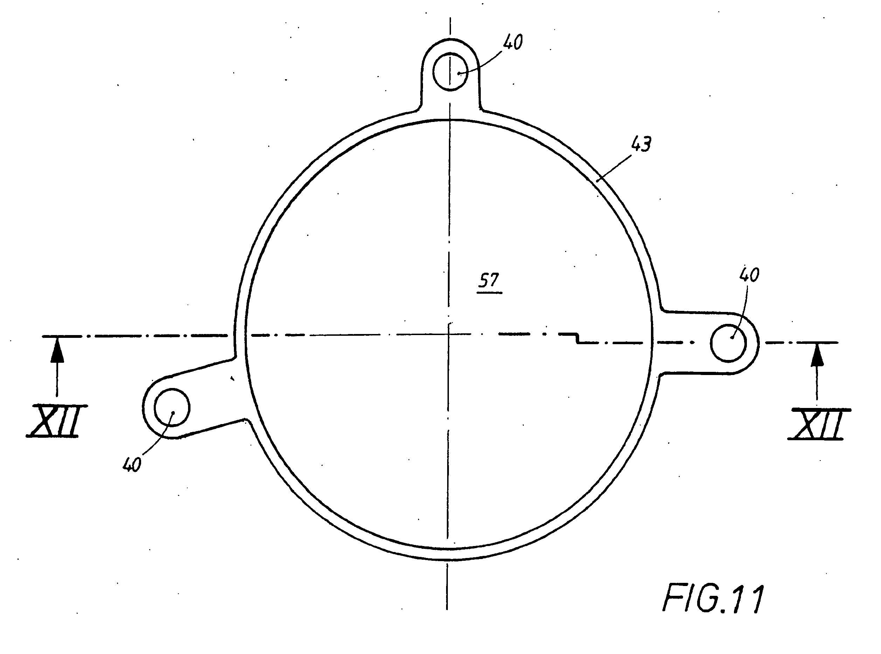

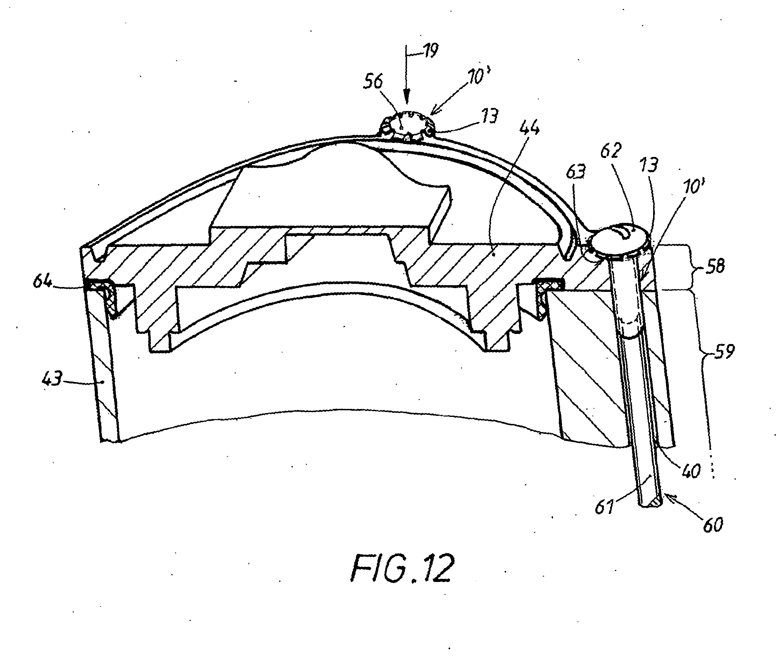

Aus den Fig. 11 und 12 ist ein Anwendungsfall der erfindungsgemäßen Hülse gezeigt, nämlich
- Fig. 11: die Draufsicht auf ein Gehäuse mit drei Bohrungen, in welche die erfindungsgemäße Befestigungshülse eingeführt werden kann und
- Fig. 12,: einen versprungenen Längsschnitt durch das Gehäuse von Fig. 11 längs der Schnittlinie XII - XII, wobei sowohl eine vorläufige Befestigung mittels der erfindungsgemäßen Hülse als auch eine die Hülse nutzende endgültige Befestigung zwischen dem Gehäuse und einem Deckel erfolgen.

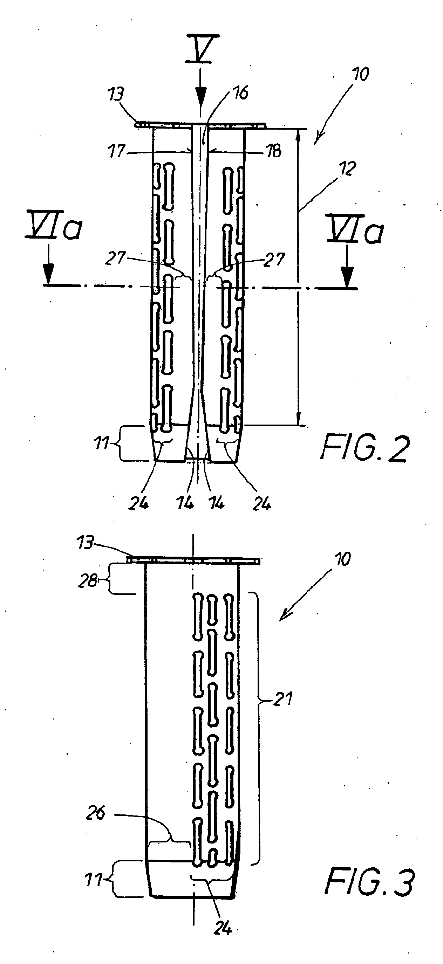

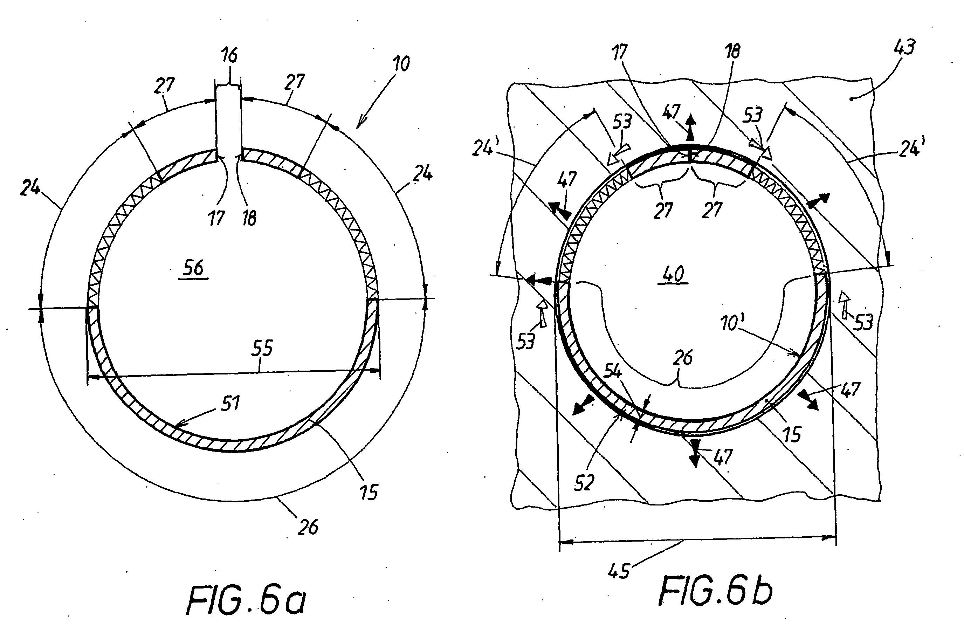

Die Hülse 10 lässt sich in axialer Richtung in drei Abschnitte gliedern, wenn man in der durch einen Pfeil 19 veranschaulichten Einführrichtung der Hülse 10 blickt. Es gibt einen sich konisch verjüngenden Anfangsabschnitt 11, dem der entscheidende zylindrische Mittelabschnitt 12 folgt. Dem Zylindermantel 15 dieses Mittelabschnitts 12 schließt sich ein als Flansch 13 ausgebildeter Endabschnitt an. Der Zylindermantel 15 ist einlagig ausgebildet und entsteht z.B. aus einem metallischen Blech 50, das zunächst in die Form des aus Fig. 7 ersichtlichen Stanz-Zwischenprodukts 20 gebracht wird. In entspannter Ruhelage des in den Fig. 1 bis 6a gezeigten fertigen Produkts besitzt die Hülse 10 einen aus Fig. 6a ersichtlichen C-Querschnitt 51. Im Zylindermantel 15 befindet sich ein durchgehender Längsschlitz 16, der von den beiden Kanten 17, 18 des Mantels 15 begrenzt wird. Im Ruhefall gemäß Fig. 1, 2 und 6a ist der Längsschlitz 16 offen und seine beiden Kanten 17, 18 liegen in Abstand zueinander. Wie am besten aus Fig. 2 ersichtlich ist, ist der Längsschlitz 16 im Bereich der konischen Ringzone durch einen divergierenden Kantenverlauf 14 gegenüber dem zylindrischen Mittelabschnitt 12 erweitert.

Der zylindrische Mittelabschnitt 12 des Hülsenmantels 15 ist segmentweise unterschiedlich ausgebildet, was sich am besten anhand des Stanz-Zwischenprodukts 20 in Fig. 7 erläutern lässt. Es gibt eine Schar von nebeneinanderliegenden Durchbrüchen 30, die ein Lochfeld 21 erzeugen. Die Durchbrüche 30 haben ein Langloch-Profil, weil ihre Lochlänge 31 im vorliegenden Fall ca. sechsmal größer als die maximale Lochweite 32.0 ausgebildet ist. Sie sollen daher nachfolgend "Langloch" bezeichnet werden. Die Lochlänge 31 weist in Längsrichtung der Hülse. Die Langlöcher 30 im Lochfeld sind im vorliegenden Fall in drei parallelen Lochreihen 22.1 bis 22.3 angeordnet. Abgesehen von den axialen Enden des Lochfeldes 21 besitzen alle Langlöcher 30 das gleiche Lochprofil. Benachbarte Lochreihen 22.1 bis 22.3 sind jedoch gegeneinander versetzt, und zwar um eine halbe Lochlänge 31. An der Stelle, wo in einer Lochreihe 22.2 von Fig. 7 das Langloch 30 sein Lochende 34 aufweist, befindet sich in der benachbarten Lochreihe 32.3 die Lochmitte 35.

Das Lochprofil 36 ist ungleichförmig ausgebildet und ergibt sich aus Fig. 8a. Das Lochprofil 36 besitzt in unterschiedlichen Abschnitten eine unterschiedliche Lochweite 32.0, 33.0. Das Lochprofil 36 hat im vorliegenden Fall annähernd eine Knochenprofil-Förm mit zwei gegeneinander konvex verlaufenden Längskanten 37.0, 38.0. An den beiden Lochenden 34 liegen konkav gegeneinander weisende Endkanten 39 vor. Das Lochprofil 36 ist sowohl gegenüber der strichpunktiert verdeutlichten Längsmittelachse gemäß dem Verlauf der drei Lochreihen 22.1 bis 22.3 als auch bezüglich einer quer dazu in der Lochmitte 35 verlaufenden Quermittelachse klappsymmetrisch ausgebildet. Bezogen auf den Ruhefall von Fig. 8a beträgt die Lochweite 33.0 in der Lochmitte 35 nur knapp 80% der maximalen Lochweite 32.0 im Bereich der Lochenden 34.

Das Lochfeld 21 erstreckt sich innerhalb einer verhältnismäßig schmalen Längszone 23 im Stanzprodukt 20, die in der fertigen Hülse 10 aus noch näher ersichtlichen Gründen ein federelastisches Längssegment 24 erzeugt, das nachfolgend kurz "Federsegment" bezeichnet werden soll. Es sind in der Hülse nur zwei solche Federsegmente 24 vorgesehen, zwischen denen ein unelastisches Längssegment 26 angeordnet ist und daher nachfolgend kurz "Festsegment" genannt wird. Dieses Festsegment 26 ist etwa dreimal so breit, wie das Federsegment 24 ausgebildet und liegt dem Längsschlitz 16 diametral gegenüber. Dieses Festsegment 26 entsteht aus einer breiten Längszone 25 im Stanz-Zwischenprodukt 20, die frei von Langlöchern 30 oder sonstigen Durchbrüchen ist.

Im Anschluss an jede der beiden Kanten 17, 18 des Längsschlitzes 16 gibt es jeweils einen Randstreifen 27, der ebenfalls frei von Langlöchern 30 oder Durchbrüchen ist und daher auch ein solches Festsegment darstellt. Es genügt wenn der Längsstreifen 27 etwa nur halb so breit wie das Federsegment 24 bzw. die ihn bildende schmale Längszone 23 im Stanz-Zwischenprodukt 20 von Fig. 7 ausgebildet ist.

Wie aus den Fig. 3 und 7 zu erkennen ist, gibt es eine Ringendzone 28, die zwischen dem Flansch 13 und dem Lochfeld 21 angeordnet ist und ebenfalls frei von Langlöchern 30 oder anderen Durchbrüchen ist. Diese Ringendzone 28 kann eine axiale Höhe aufweisen, die etwas größer als die Breite des Federsegments 24 bzw. der sie bildenden Längszone 23 des Stanz-Zwischenprodukts 20 ist.

Wie aus dem Stanz-Zwischenprodukt 20 von Fig. 7 zu erkennen ist, gibt es ein Endstück 29, das zur Herstellung des eingangs erwähnten Flansches 13 dient. In diesem Endstück 29 sind Spalte 49 eingeschnitten, die nach der Ausformung des Flansches 13 in der fertigen Hülse 10 radial verlaufen und zwischen sich radiale Lappen 48 entstehen lassen. Deshalb soll der Flansch 13 nachfolgend "Spaltflansch" genannt werden. Die Form der Lappen 48 hängt von dem Profil der eingeschnittenen Spalte 49 ab. Im vorliegenden Fall ist der Umriss der Lappen 48 etwa rechteckförmig oder quadratisch ausgebildet.

Wie Fig. 8a verdeutlicht, befinden sich zwischen benachbarten Reihen 22.1 bis 22.3 der Langlöcher 30 Stege 41, die sich in Längsrichtung der Hülse erstrecken und daher kurz "Längsstege" bezeichnet werden sollen. Die Längsstege 41 sind auf der einen Seite von der Lochkante 37.0 der einen Lochreihe 22.2 und auf der gegenüberliegenden Seite von der Lochkante 38.0 des Langlochs 30 der benachbarten Lochreihe 22.1 begrenzt.

Zwischen den Lochenden 34 von Langlöchern 30, die innerhalb einer Lochreihe 22.2 angeordnet sind, gibt es quer zur Hülsen-Längsrichtung verlaufende Stege 42, die deshalb "Querstege" genannt werden sollen. Der Gebrauchsfall der erfindungsgemäßen Hülse 10 ist in Fig. 6b veranschaulicht. Der Gebrauchsfall ergibt sich, wenn die Hülse 10 in eine Bohrung 40 eines Körpers 43 eingeführt ist. Wie ein Vergleich zwischen Fig. 6b mit Fig. 6a zeigt, hat die Bohrung 40 einen kleineren Bohrungsdurchmesser 45 gegenüber dem Hülsendurchmesser 55 der entspannten Hülse 10. Die in Fig. 1 angedeutete Einführbewegung 19 erfolgt von der Konus-Ringzone 11 aus, wodurch die beiden den Längsschlitz 16 im Bereich des mittleren zylindrischen Abschnitts 12 begrenzenden Kanten 17, 18 gemäß Fig. 6b gegeneinanderstoßen. Aus dem C-Querschnitt 51 von Fig. 6a entsteht ein in sich geschlossener O-Querschnitt 52, gemäß Fig. 6b. Beim Einführen in das Bohrloch 40 behält sowohl das mittlere Festsegment 26 als auch die beiden Randstreifen 27 im Wesentlichen ihre ursprüngliche Segmentbreite, üben aber zwischen sich in Umfangsrichtung des Hülsenmantels 15 verlaufende Kräfte 53 aus, die auf die dazwischen liegenden Federsegmente 24 bzw. 24' wirken. Was dort passiert, lässt sich am besten aus einem Vergleich zwischen Fig. 8a und 8b erkennen.

Die Umfangskräfte 53 haben zur Folge, dass sich die beschriebenen Längsstege 41 auf Kosten der lichten Weite 33.1 der Durchbrüche 30 verformen und deshalb als federnde Elemente im Hülsenmantel 15 fungieren. Es verändert sich die Segmentbreite 46.0 der entspannten Federsegmente 24 im Ruhefall von Fig. 8a in eine kleinere Segmentbreite 46.1 im Gebrauchsfall von Fig. 8b. Die verformten Federsegmente im Gebrauchsfall sollen mit dem Bezugszeichen 24' bezeichnet werden. Die Federsegmente 24' von Fig. 8b, 6b stehen unter einer inneren elastischen Gegenspannung und erzeugen allseitig auf die Bohrung 40 einwirkende radiale Spannkräfte. Diese Spannkräfte 47 entstehen also nachdem die beiden Kanten 17, 18 des Längsschlitzes 16 einander berührt haben durch innere Verspannung der zwischen den Festsegmenten 26, 27 befindlichen nachgiebigen Federsegmente 24'. Das führt zu folgendem bemerkenswerten Ergebnis.

Wie Fig. 6b zeigt, befinden sich die Federsegmente 24' innerhalb des von der Materialstärke 54 des Hülsenmantels 15 bestimmten schmalen Ringquerschnitt. Wie schon im Ruhefall aus Fig. 1 und 5 zu erkennen ist, ist das Innere 56 des Hülsenmantels 15 von diesen Federsegmenten 24 im Wesentlichen frei. Das gilt auch für den Gebrauchsfall der gespannten Federsegmente 24', wo das freie Hülseninnere 56 zur Steckaufnahme eines Schafts verwendet werden kann. Wie so etwas verwirklicht werden kann, zeigen die Fig. 11 und 12.

In Fig. 11 ist die Draufsicht auf ein als Gehäuse ausgebildeter erster Körper 43 gezeigt. Um die Gehäuseöffnung 57 herum, befinden sich in umfangsseitigen Rippen drei der beschriebenen Bohrungen 40, in welche drei erfindungsgemäße Klemmhülsen 10 eingeführt werden sollen. Wie Fig. 12 veranschaulicht, soll das Gehäuse 40 mit einem Deckel 44 verschlossen werden, der damit ausgerichtete Bohrungen hat. Die Gesamtbohrung 40 lässt sich in den beiden Körper 43, 44 in zwei Abschnitte gliedern. Es gibt einen ersten Bohrungsteil 58 im Deckel 44, der sich in einen nur teilweise aus Fig. 12 ersichtlichen zweiten Bohrungsteil 59 des Gehäuses 43 fortsetzt. Die Klemmhülse 10 wird durch die fluchtenden ersten und zweiten Bohrungsteile 58, 59 eingeschoben, wodurch sich die Spannkräfte in den Federsegmenten 24' aufbauen. Die gespannte Klemmhülse 10' dient mindestens für eine vorläufige Befestigung zwischen den beiden Körpern 43, 44. Dabei stützen sich die gefederten Spaltflansche 13 an einer radialen Schulter 63 des Deckels ab.

Danach ist das Hülseninnere 56 zur Aufnahme eines Schafts 61 frei. Der Schaft 61 gehört in diesem Ausführungsbeispiel zu einer Schraube 60, die für eine endgültige Befestigung des Deckels 44 am Gehäuse 43 dient. Der Schaft 61 besitzt an seinem einen Ende ein nicht näher gezeigtes Schraubgewinde, welches in eine ebenfalls nicht näher gezeigte Gewindeaufnahme des Bohrungsteils 59 im Gehäuse 43 einschraubbar ist. Am gegenüberliegenden Ende besitzt die Schraube 60 einen Kopf 62, der sich im Festschraubzustand an dem Spaltflansch 13 der gespannten Klemmhülse 10' abstützt. Der Spaltflansch 13 fungiert als Unterlegscheibe. Im Festschraubzustand wird eine elastische Ringdichtung 64 zwischen dem Deckel 44 und dem Gehäuse 43 festgeklemmt.

Der Spaltflansch 13 kann auch als Federring fungieren, was anhand der Fig. 10 näher erläutert wird. In Fig. 10 ist zunächst, wie bereits oben erwähnt wurde, in ausgezogenen Linien eine Vergrößerung eines Lappens 48 des bisherigen Ausführungsbeispiels dargestellt. Strichpunktiert ist eine Variante erläutert. Diese besteht darin, dass der eine Radialrand 65 des Lappens aus der strichpunktiert verdeutlichten Ebene 66 des Spaltflansches 13 nach oben im Sinne der strichpunktierten Kontur 67 herausgebogen ist. Dieser Herausbiegung 67 erzeugt einen alternativen Lappen 48' im Spaltflansch und bildet ein Element eines Federrings, der beim Festziehen der beschriebenen Schraube 30 zur Sicherung des Schraubenkopfs 62 an der radialen Außenschulter 63 vom Deckel 44 dient.

In Fig. 9 ist zunächst in starker Vergrößerung in ausgezogenen Linien ein Teilstück eines Axialschnitts durch die erfindungsgemäße Klemmhülse 10 in Blickrichtung der Schnittlinie IX - IX von Fig. 5 dargestellt. Auch in diesem Fall ist eine zweite Alternative 10" der Klemmhülse strichpunktiert eingezeichnet, wodurch die Abweichung gegenüber dem ersten Ausführungsbeispiel erkennbar wird. Der Unterschied besteht darin, dass im Wesentlichen in der Längsmitte eines Lappens vom Spaltflansch 13 eine Sicke 68 eingedrückt ist, die im Übergangsbereich zwischen dem Flansch 13 und dem zylindrischen Hülsenmantel 15 angeordnet ist. Eine solche Sicke 68 dient zur Versteifung des Flansches 13 bzw. seiner gefederten Lappen. Dadurch ist die erwähnte vorläufige Befestigungswirkung der Hülse im Spannzustand 10' zwischen den beiden zu verbindenden Körpern verbessert.

### Bezugszeichenliste :

- 10: Hülse im Ruhefall, entspannte Klemmhülse (Fig. 1 bis 6a)
- 10': Gebrauchsfall von 10, Spannzustand der Klemmhülse (Fig. 6b, 12)
- 10": zweite Alternative von 10 (Fig. 9)
- 11: konischer Anfangsabschnitt von 10, Konus-Ringzone (Fig. 1)
- 12: mittlerer, zylindrischer Abschnitt von 15 (Fig. 1)
- 13: endseitiger Flansch von 10, Spaltflansch (Fig. 1, 5)
- 14: divergierende Schlitzkanten in 11 (Fig. 1)
- 15: Hülsenmantel von 10 (Fig. 1)
- 16: Längsschlitz in 10 (Fig. 1)
- 17: erste Schlitzkante von 16 (Fig. 1)
- 18: zweite Schlitzkante von 16 (Fig. 1)
- 19: Pfeil der Einführbewegung von 10 (Fig. 1, 12)
- 20: Stanzzwischenprodukt (Fig. 7)
- 21: Lochfeld von 30 (Fig. 7)
- 22.1: erste Lochreihe von 30 (Fig. 7, 8a)
- 22.2: zweite Lochreihe von 30 (Fig. 7, 8a)
- 22.3: dritte Lochreihe von 30 (Fig. 7, 8a)
- 23: Loch-Längszone von 20 (Fig. 7)
- 24: federndes Längssegment im Ruhefall von 10, Federsegment (Fig. 1, 6a)
- 24': Gebrauchsfall von 24, Spannungszustand (Fig. 6b)
- 25: durchbruchsfreie Mittelzone von 20 (Fig. 7)
- 26: unelastisches Längssegment aus 25 in 10, Festsegment (Fig. 6a, 7).
- 27: unelastischer Randstreifen in 10 bei 16 (Fig. 6a, 7)
- 28: unelastische Ringendzone von 10 (Fig. 3, 7)
- 29: Endstück von 20 für 13 (Fig. 7)
- 30: Durchbruch, Langloch (Fig. 7 bis 8b)
- 31: Lochlänge von 30 (Fig. 7, 8a)
- 32.0: maximale Lochweite von 30 im Ruhefall (Fig. 7, 8a)
- 32.1: maximale Lochweite von 30 im Gebrauchsfall (Fig. 8b)
- 33.0: minimale Lochweite von 30 im Ruhefall (Fig. 7, 8a)
- 33.1: minimale Lochweite von 30 im Gebrauchsfall (Fig. 8b)
- 34: Lochende von 30 (Fig. 7, 8a)
- 35: Lochmitte von 30 (Fig. 7, 8a)
- 36: Lochprofil von 30, Knochen-Profil-Form (Fig. 8a)
- 37.0: erste Längskante von 30 im Ruhefall (Fig. 8a)
- 37.1: Gebrauchsfall von 37.0 (Fig. 8b)
- 38.0: zweite Längskante von 30 im Ruhefall (Fig. 8a)
- 38.1: Gebrauchslage von 38.0 (Fig. 8b)
- 39: konkave Endkante von 30 (Fig. 8a)
- 40: Bohrung in 43 bzw. 44 (Fig. 6b, 12)
- 41: Längssteg zwischen 30 (Fig. 8a)
- 42: Quersteg zwischen 30 (Fig. 8a)
- 43: erster Körper für 40, Gehäuse (Fig. 6b, 11, 12)
- 44: zweiter Körper für 40, Deckel (Fig. 12)
- 45: Bohrungsdurchmesser von 40 (Fig. 6b)
- 46.0: Segmentbreite von 24 im Ruhefall (Fig. 8a)
- 46.1: Segmentbreite von 24' im Gebrauchsfall (Fig. 8b)
- 47: Spannkraft von 10' (Fig. 6b)
- 48: Lappen von 13 (Fig. 5)
- 48': alternative Lappen von 13 (Fig. 10)
- 49: Spalt in 29 bzw. 13 (Fig. 7, 5)
- 50: Blech für 20 (Fig. 7)
- 51: offener C-Querschnitt von 10 (Fig. 6a)
- 52: geschlossener O-Querschnitt von 10' (Fig. 6b)
- 53: Umfangskräfte bei 10' (Fig. 6b, 8b)
- 54: Materialstärke von 15 (Fig. 6b)
- 55: Hülsendurchmesser von 10 (Fig. 6a)
- 56: Hülseninneres von 10 (Fig. 1, 6a, 12)
- 57: Gehäuseöffnung von 43 (Fig. 11)
- 58: erster Bohrungsteil von 40 in 42 (Fig. 12)
- 59: zweiter Bohrungsteil von 40 in 41 (Fig. 12)
- 60: Schraube (Fig. 12)
- 61: Schaft von 60 (Fig. 12)
- 62: Kopf von 60 (Fig. 12)
- 63: radiale Schulter an 44 für 62 (Fig. 12)
- 64: Gummidichtung (Fig. 12)
- 65: Radialrand von 48' (Fig. 10)
- 66: Ebene von 13 (Fig. 10)
- 67: Ausbiegung von 48', Abkantung (Fig. 10)
- 68: Sicke in 10" (Fig. 9)
- 69: Abstand zwischen 22.1, 22.2 (Fig. 8a)

## Patentansprüche

1. Befestigungshülse, die in eine Bohrung (40) eines oder mehrerer Körper (43, 44) einführbar (19) ist und dort vollflächig anliegt,
mit einem aus Blechmaterial konstanter Blechdicke gebildeten einlagigen zylindrischen Hülsenmantel (15), der längsgeschlitzt (16) ist und vorsprungsfreie innere und äußere Mantelflächen aufweist,
wobei beide Kanten (17, 18) des Längsschlitzes im Gebrauchsfall (10') der Hülse (10) in der Bohrung (40) sich aneinander abstützen und in Umfangsrichtung des Hülsenmantels (15) verlaufende Umfangskräfte (53) erzeugen,
wobei ein Lochfeld (21) aus mindestens zwei zueinander parallelen Reihen (22.1 bis 22.3) von Durchbrüchen (30) im Hülsenmantel angeordnet ist, von denen die eine Lochreihe (22.1) gegenüber ihrer benachbarten Lochreihe (22.2) längsversetzt ist,
wodurch der Hülsenmantel (15) einerseits durchlaufende Längsstege (41) zwischen benachbarten Lochreihen (22.1 bis 22.3) aufweist, die quer zu den Umfangskräften (53) orientiert sind,
und andererseits Querstege (42) zwischen aufeinanderfolgenden Durchbrüchen (30) in einer Lochreihe (22.1 bis 22.3) besitzt, die in Richtung der Umfangskräfte (53) verlaufen und am Durchbruch (30) der benachbarten Lochreihe enden,
wobei im Gebrauchsfall (10') der Hülse (10) die in Umfangsrichtung gegenüberliegenden Kanten der Durchbrüche (30) sich einander nähern und die Längsstege (41) innerhalb des Hülsenmantels (15) sich auf Kosten der lichten Weite (32.1, 33.1) der Durchbrüche (30) verformen, während die Querstege (42) unverformt bleiben,
wodurch das Lochfeld (21) federelastisch ist, die Umfangskräfte (53) erzeugt und als Federsegment fungiert, welches innerhalb des schmalen Ringquerschnitts des zylindrischen Hülsenmantels (15) angeordnet ist,
die Hülse (10) neben dem Federsegment wenigstens ein in Umfangsrichtung unelastisches Längssegment (26, 27) aufweist, welches keine Durchbrüche (30) besitzt und als Festsegment in der Hülse (10) fungiert,
und das Festsegment im Gebrauchsfall (10') der Hülse (10) die vom Federsegment kommenden Umfangskräfte (53) aufnimmt und radial nach außen wirkende Spannkräfte (57) erzeugt, welche die Hülse gegen die Innenwand der Bohrung (40) drücken.

2. Hülse nach Anspruch 1, **dadurch gekennzeichnet, dass** - abgesehen vom axialen Ende des Lochfelds (21) - alle Durchbrüche (30) im Wesentlichen das gleiche Lochprofil (36) aufweisen.

3. Hülse nach Anspruch 1 oder 2, **dadurch gekennzeichnet, dass** der Versatz zwischen benachbarten Lochreihen (22.1 bis 22.3) im Wesentlichen die halbe Lochlänge (31) eines Durchbruchs (30) beträgt,
weshalb der Durchbruch (30) der einen Lochreihe (22.1) im Wesentlichen dort endet (35), wo die Mitte des Durchbruchs (30) in der benachbarten Lochreihe (22.2) angeordnet ist.

4. Hülse nach einem der Ansprüche 1 bis 3, **dadurch gekennzeichnet, dass** die Hülse (15) im Anschluss an jede der beiden Kanten (17, 18) ihres Längsschlitzes (16) einen Randstreifen (27) aufweist, der jeweils als Festsegment ausgebildet ist.

5. Hülse nach Anspruch 4, **dadurch gekennzeichnet, dass** der Randstreifen (27) eine Breite aufweist, die kleiner/gleich der Breite des Federsegments (24) ausgebildet ist.

6. Hülse nach Anspruch 5, **dadurch gekennzeichnet, dass** das Federsegment (24) etwa doppelt so breit wie der Randstreifen (27) ausgebildet ist.

7. Hülse nach einem der Ansprüche 3 bis 6, **dadurch gekennzeichnet, dass** die Hülse (10) zwischen zwei Federsegmenten (24) eine als Festsegment (26) ausgebildete Mittelzone (25) aufweist.

8. Hülse nach Anspruch 7, **dadurch gekennzeichnet, dass** die Mittelzone (25) dem Längsschlitz (16) der Hülse (10) im Wesentlichen diametral gegenüberliegt.

9. Hülse nach Anspruch 7 oder 8, **dadurch gekennzeichnet, dass** die Mittelzone (25) etwa dreimal so breit wie ein Federsegment (24) ausgebildet ist.

10. Hülse nach einem der Ansprüche 1 bis 9, **dadurch gekennzeichnet, dass** der Durchbruch in der Hülse (10) als Langloch (30) ausgebildet ist.

11. Hülse nach Anspruch 10, **dadurch gekennzeichnet, dass** das Langloch (30) sich im Wesentlichen in Längsrichtung der Hülse (10) erstreckt.

12. Hülse nach Anspruch 10 oder 11, **dadurch gekennzeichnet, dass** die Lochlänge (31) des Langlochs (30), die in Verlaufsrichtung der Hülse weist, größer als der Abstand (69) zwischen benachbarten Lochreihen (22.1, 22.2) ausgebildet ist.

13. Hülse nach Anspruch 12, **dadurch gekennzeichnet, dass** der Abstand (69) zwischen benachbarten Lochreihen (22.1, 22.2) 20% bis 50% der Lochlänge (31) beträgt.

14. Hülse nach einem der Ansprüche 10 bis 13, **dadurch gekennzeichnet, dass** die größte Weite (32.0) des Langlochs (30) zwischen 5% bis 30% der Lochlänge (31) beträgt.

15. Hülse nach einem der Ansprüche 10 bis 14, **dadurch gekennzeichnet, dass** das Langloch (30) ein ungleichförmiges Lochprofil (36) aufweist.

16. Hülse nach Anspruch 15, **dadurch gekennzeichnet, dass** das Langloch (30) in unterschiedlichen Abschnitten eine unterschiedliche Lochweite (32.0, 33.0) besitzt.

17. Hülse nach Anspruch 16, **dadurch gekennzeichnet, dass** das Langloch (30) in seiner Mitte (35) eine gegenüber seinen beiden Lochenden (34) kleinere lichte Weite (33.0) aufweist.

18. Hülse nach Anspruch 17, **dadurch gekennzeichnet, dass** - bezogen auf die maximale Lochweite (32.0) - die Differenz zwischen der größten (32.0) und kleinsten (33.0) Lochweite vom Langloch (30) zwischen 10% bis 40% liegt.

19. Hülse nach einem der Ansprüche 16 bis 18, **dadurch gekennzeichnet, dass** das Lochprofil (36) des Langlochs (30) annähernd eine Knochenprofil-Form aufwei st,
bestehend aus zwei gegeneinander konvex verlaufenden Längskanten (37.0, 38.0), die in Längsrichtung der Hülse (10) verlaufen und zwischen sich das Langloch (30) schließen
und konkaven Endkanten (39), die das Langloch (30) an beiden Enden (34) begrenzen und in Umfangsrichtung der Hülse (10) verlaufen.

20. Hülse nach einem der Ansprüche 1 bis 19, **dadurch gekennzeichnet, dass** die Längsstege (41) zwischen benachbarten Lochreihen (22.1 bis 22.3) einen S-förmigen Verlauf aufweisen, dessen S-Form mit wachsenden Umfangskräfte (53) bauchiger wird.

21. Hülse nach einem der Ansprüche 10 bis 20, **dadurch gekennzeichnet, dass** das Langloch-Profil (36) zu seiner in Längsrichtung der Hülse (10) weisenden Längsmittelachse und/oder zu seiner in Umfangsrichtung der Hülse (10) weisenden Quermittelachse klappsymmetrisch ausgebildet ist.

22. Hülse nach einem der Ansprüche 1 bis 21, **dadurch gekennzeichnet, dass** die Hülse (10) zwar zylindrisch ausgebildet ist, sich aber an ihrem in Einführrichtung (19) weisenden Anfangsabschnitt (11) konisch verjüngt.

23. Hülse nach Anspruch 22, **dadurch gekennzeichnet**, das der konische Abschnitt (11) der Hülse (10) im Wesentlichen frei von Durchbrüchen ist und eine Konus-Ringzone bildet.

24. Hülse nach Anspruch 23, **dadurch gekennzeichnet, dass** der Längsschlitz (16) der Hülse (10) im Bereich der Konus-Ringzone (11) erweitert ist
und dass im Gebrauchsfall (10') die beiden Kanten (17, 18) den Längsschlitzes (16) im Bereich der Konus-Ringzone (11) einen Ausschnitt (14, 14) zwischen sich schließen und für eine radiale Elastizität der Konus-Ringzone (11) sorgen.

25. Hülse nach einem der Ansprüche 1 bis 24, **dadurch gekennzeichnet, dass** die Hülse (10) an ihrem beim Einführen in das Bohrloch nacheilenden Ende einen Flansch (13) aufweist
und dass der Flansch (13) bei vollzogener Einführung (10') der Hülse sich an einer radialen Außenschulter (63) eines Körpers (44) abstützt, der wie zum Einführen (19) der Hülse dienende Bohrung (40) besitzt.

26. Hülse nach Anspruch 25, **dadurch gekennzeichnet, dass** die Hülse (10) zwischen dem Flansch (13) und einem mit Durchbrüchen (30) versehenen Lochfeld (21) eine Ringendzone (28) aufweist, die keinen Durchbruch besitzt.

27. Hülse nach Anspruch 26, **dadurch gekennzeichnet, dass** die Ringendzone (28) eine axiale Höhe aufweist, die größer/gleich der Breite eines Lochfelds (21) ausgebildet ist.

28. Hülse nach einem der Ansprüche 25 bis 27, **dadurch gekennzeichnet, dass** der Flansch (13) durch radiale Spalte (49) in eine Schar von radialen Lappen (48) gegliedert ist und die Spalte einen "Spaltflansch" erzeugen.

29. Hülse nach Anspruch 28, **dadurch gekennzeichnet, dass** die Lappen des Spaltflansches (13) ein rechteckförmiges oder quadratisches Lappenumriss aufweisen.

30. Hülse nach Anspruch 28 oder 29, **dadurch gekennzeichnet, dass** die Lappen (48) bereichsweise (65) verbogen (67) sind.

31. Hülse nach Anspruch 30, **dadurch gekennzeichnet, dass** die Biegungen (67) der Lappen (48) aus der Ebene (66) des Spaltflansches (13) nach oben und/oder unten herausragen.

32. Hülse nach Anspruch 31, **dadurch gekennzeichnet, dass** die Biegungen (67) der Lappen (48) durch eine Abkantung an wenigstens einem ihrer Radialbereiche (65) erzeugt sind.

33. Hülse nach einem der Ansprüche 1 bis 32, **dadurch gekennzeichnet, dass** das Innere (56) der Hülse (10) frei ist und als Steckaufnahme für einen Schaft (61) dient.

34. Hülse nach Anspruch 33, **dadurch gekennzeichnet, dass** der Schaft (61) das Hülseninnere (56) durchsetzt und als Befestigungsmittel zwischen zwei Körpern (43, 44) fungiert.

35. Hülse nach Anspruch 34, **dadurch gekennzeichnet, dass** der Schaft (61) zu einer Schraube (60) gehört, die einerends ein Schraubgewinde und anderends einen Schraubknopf(62) aufweist,
dass der Schaft (61) mit seinem Schraubgewinde in einen Bohrungsteil (59) eines ersten, unteren Körpers (43) einsteckbar (19) und dort festschraubbar ist,
dass der Schaft (61) einen ersten Bohrungsteil (58) eines zweiten, oberen Körpers (44) durchsetzt und mit dem ersten Bohrungsteil (58) fluchtet,
dass die eingeführte Hülse (10) sich wenigstens in einen vorderen Abschnitt des zweiten Bohrungsteils (59) hinein erstreckt und als eine vorläufige Befestigung zwischen dem oberen und dem unteren Körper (43, 44) fungiert,
dass die Schraube (60), deren Schaft (61) das Hülseninnere (56) durchsetzt, eine endgültige Befestigung zwischen dem unteren und oberen Körper (43, 44) bewirkt
und das bei festgezogener Schraube (60) der Schraubenkopf (62) sich an einer radialen Außenschulter (63) des oberen Körpers (44) abstützt.

36. Hülse nach Anspruch 35, **dadurch gekennzeichnet, dass** der Flansch (13) der Hülse (10) als Unterlegscheibe zwischen der radialen Außenschulter (63) und dem Schraubenkopf (62) fungiert.

37. Hülse nach einem der Ansprüche 32 bis 36, **dadurch gekennzeichnet, dass** der mit Abkantungen (67) an seinen Flansch-Lappen (48) versehene Spaltflansch (13) als Federring zwischen der radialen Außenschulter (63) vom oberen Körper (44) und dem Schraubenkopf (62) der Schraube (60) fungiert und zur Sicherung der Schraube (60) dient.

38. Hülse nach einem der Ansprüche 35 bis 37, **dadurch gekennzeichnet, dass** der untere Körper (43) ein Gehäuse und der obere Körper (44) ein Gehäusedeckel sind, die durch Einführen der Hülse (10') in die beidseitigen Bohrungen miteinander vormontierbar sind.

39. Hülse nach einem der Ansprüche 1 bis 38, **dadurch gekennzeichnet, dass** mindestens eine Sicke (68) im Übergangsbereich zwischen den Flansch (13) und dem zylindrischen Hülsenmantel (15) angeordnet ist.

40. Hülse nach Anspruch 39, **dadurch gekennzeichnet, dass** die Sicke (68) im Wesentlichen in der Längsmitte des Lappens (48) vom Spalttlansch (13) sich befindet.

## Claims

1. Fastening sleeve which can be inserted (19) in a bore (40) in one or more bodies (43, 44) and abuts thereon over its entire surface,
having a single-layer cylindrical sleeve casing (15) formed from sheet material of a constant sheet thickness, which is longitudinally slotted (16) and has inner and outer surfaces free from projections,
the two edges (17, 18) of the longitudinal slot resting on one another during use (10') of the sleeve (10) in the bore (40) and generating circumferential forces (53) extending in the circumferential direction of the sleeve casing (15),
wherein a perforated area (21) consisting of at least two parallel rows (22.1 to 22.3) of openings (30) is provided in the sleeve casing, one row of holes (22.1) being longitudinally offset relative to the adjacent row of holes (22.2),
as a result of which the sleeve casing (15) comprises on the one hand continuous longitudinal webs (41) extending between adjacent rows of holes (22.1 to 22.3) which are oriented at right-angles to the circumferential forces (53),
and on the other hand transverse webs (42) between successive openings (30) in a row of holes (22.1 to 22.3) which extend in the direction of the circumferential forces (53) and terminate at the opening (30) in the adjacent row of holes,
wherein during use (10') of the sleeve (10) the edges of the openings (30) that are opposite one another in the circumferential direction move closer together and the longitudinal webs (41) within the sleeve casing (15) deform at the expense of the clear width (32.1, 33.1) of the openings (30), while the transverse webs (42) remain undeformed,
as a result of which the perforated area (21) is springily elastic, generates the circumferential forces (53) and acts as a spring segment which is mounted within the narrow annular cross-section of the cylindrical sleeve casing (15),
the sleeve (10) comprises besides the spring segment at least one longitudinal segment (26, 27) that is inelastic in the circumferential direction, has no openings (30) and acts as a solid segment in the sleeve (10),
and during use (10') of the sleeve (10) the solid segment absorbs the circumferential forces (53) coming from the spring segment and generates tensile forces (57) acting radially outwards which press the sleeve against the inner wall of the bore (40).

2. Sleeve according to claim 1, **characterised in that** - apart from the axial end of the perforated area (21) - all the openings (30) have substantially the same hole profile (36).

3. Sleeve according to claim 1 or 2, **characterised in that** the offset between adjacent rows of holes (22.1 to 22.3) is substantially half the hole length (31) of an opening (30),
for which reason the opening (30) of one row of holes (22.1) terminates essentially at the point (35) where the centre of the opening (30) in the adjacent row of holes (22.2) is located.

4. Sleeve according to one of claims 1 to 3, **characterised in that** the sleeve (15) comprises, adjacent to each of the two edges (17, 18) of its longitudinal slot (16), an edge strip (27) which is in the form of a solid segment.

5. Sleeve according to claim 4, **characterised in that** the edge strip (27) has a width that is constructed to be less than or equal to the width of the spring segment (24).

6. Sleeve according to claim 5, **characterised in that** the spring segment (24) is constructed to be roughly twice as wide as the edge strip (27).

7. Sleeve according to one of claims 3 to 6, **characterised in that** the sleeve (10) comprises, between two spring segments (24), a central zone (25) constructed as a solid segment (26).

8. Sleeve according to claim 7, **characterised in that** the central zone (25) is substantially diametrically opposite the longitudinal slot (16) of the sleeve (10).

9. Sleeve according to claim 7 or 8, **characterised in that** the central zone (25) is constructed to be approximately three times as wide as a spring segment (24).

10. Sleeve according to one of claims 1 to 9, **characterised in that** the opening in the sleeve (10) is constructed to be an oblong hole (30).

11. Sleeve according to claim 10, **characterised in that** the oblong hole (30) extends substantially in the longitudinal direction of the sleeve (10).

12. Sleeve according to claim 10 or 11, **characterised in that** the length (31) of the oblong hole (30), which points in the direction of extent of the sleeve, is constructed to be greater than the distance (69) between adjacent rows of holes (22.1, 22.2).

13. Sleeve according to claim 12, **characterised in that** the distance (69) between adjacent rows of holes (22.1, 22.2) amounts to 20% to 50% of the length (31) of the hole.

14. Sleeve according to one of claims 10 to 13, **characterised in that** the maximum width (32.0) of the oblong hole (30) is between 5% and 30% of the length (31) of the hole.

15. Sleeve according to one of claims 10 to 14, **characterised in that** the oblong hole (30) has a non-uniform hole profile (36).

16. Sleeve according to claim 15, **characterised in that** the oblong hole (30) has a different hole width (32.0, 33.0) in different sections.

17. Sleeve according to claim 16, **characterised in that** the oblong hole (30) has a smaller clear width (33.0) at its centre (35) than at its two ends (34).

18. Sleeve according to claim 17, **characterised in that** - based on the maximum hole width (32.0) - the difference between the largest (32.0) and smallest (33.0) width of the oblong hole (30) is between 10% and 40%.

19. Sleeve according to one of claims 16 to 18, **characterised in that** the hole profile (36) of the oblong hole (30) is shaped approximately like a bone profile,
consisting of two longitudinal edges (37.0, 38.0) extending in a convex configuration to one another, which extend in the longitudinal direction of the sleeve (10) and enclose the oblong hole (30) between them
and concave terminal edges (39) which delimit the oblong hole (30) at both ends (34) and extend in the circumferential direction of the sleeve (10).

20. Sleeve according to one of claims 1 to 19, **characterised in that** the longitudinal webs (41) between adjacent rows of holes (22.1 to 22.3) have an S-shaped configuration, the S-shape of which becomes more rounded as the circumferential forces (53) increase.

21. Sleeve according to one of claims 10 to 20, **characterised in that** the oblong hole profile (36) is mirror symmetrical in construction with respect to its central longitudinal axis pointing in the longitudinal direction of the sleeve (10) and/or with respect to its central transverse axis pointing in the circumferential direction of the sleeve (10).

22. Sleeve according to one of claims 1 to 21, **characterised in that** the sleeve (10) is indeed of cylindrical construction but tapers conically at its initial portion (11) pointing in the direction of insertion (19).

23. Sleeve according to claim 22, **characterised in that** the conical portion (11) of the sleeve (10) is substantially free from openings and forms an annular conical zone.

24. Sleeve according to claim 23, **characterised in that** the longitudinal slot (16) of the sleeve (10) is broadened in the region of the annular conical zone (11 )
and **in that**, during use (10'), the two edges (17, 18) of the longitudinal slot (16) in the region of the annular conical zone (11) enclose a cut-out (14, 14) between them and ensure radial elasticity of the annular conical zone (11).

25. Sleeve according to one of claims 1 to 24, **characterised in that** the sleeve (10) has a flange (13) at its end that lags behind during insertion into the borehole
and **in that** once the insertion (10') of the sleeve is complete the flange (13) is supported on a radial outer shoulder (63) of a body (44) which comprises the bore (40) used for insertion (19) of the sleeve.

26. Sleeve according to claim 25, **characterised in that** the sleeve (10) has an annular end zone (28) between the flange (13) and a perforated area (21) provided with openings (30), this end zone (28) having no openings.

27. Sleeve according to claim 26, **characterised in that** the annular end zone (28) has an axial height which is greater than or equal to the width of a perforated area (21).

28. Sleeve according to one of claims 25 to 27, **characterised in that** the flange (13) is divided by radial slots (49) into a number of radial tabs (48) and the slots produce a "slotted flange".

29. Sleeve according to claim 28, **characterised in that** the tabs of the slotted flange (13) have a rectangular or square tab contour.

30. Sleeve according to claim 28 or 29, **characterised in that** the tabs (48) are bent (67) in parts (65).

31. Sleeve according to claim 30, **characterised in that** the bends (67) in the tabs (48) project upwards and/or downwards out of the plane (66) of the slotted flange (13).

32. Sleeve according to claim 31, **characterised in that** the bends (67) in the tabs (48) are produced by a crease at at least one of their radial regions (65).

33. Sleeve according to one of claims 1 to 32, **characterised in that** the inside (56) of the sleeve (10) is free and serves as a receiving socket for a shaft (61).

34. Sleeve according to claim 33, **characterised in that** the shaft (61) passes through the inside (56) of the sleeve and acts as a securing means between two bodies (43, 44).

35. Sleeve according to claim 34, **characterised in that** the shaft (61) belongs to a screw (60) which comprises a screw thread at one end and a screw head (62) at the other end,
**in that** the shaft (61) can be inserted (19) with its screw thread into a bore part (59) of a first lower body (43) and screwed tightly therein,
**in that** the shaft (61) passes through a first bore part (58) of a second upper body (44) and is aligned with the first bore part (58),
**in that** the inserted sleeve (10) extends at least into a front portion of the second bore part (59) and acts as a temporary fixing between the upper and lower body (43, 44),
**in that** the screw (60), the shaft (61) of which passes through the inside (56) of the sleeve effects a final fixing between the upper and lower bodies (43, 44)
and **in that** once the screw (60) has been tightened the screw head (62) is supported on a radial outer shoulder (63) of the upper body (44).

36. Sleeve according to claim 35, **characterised in that** the flange (13) of the sleeve (10) acts as a washer between the radial outer shoulder (63) and the screw head (62).

37. Sleeve according to one of claims 32 to 36, **characterised in that** the slotted flange (13) provided with creases (67) on its flange tabs (48) acts as a spring ring between the radial outer shoulder (63) of the upper body (44) and the screw head (62) of the screw (60) and serves to secure the screw (60).

38. Sleeve according to one of claims 35 to 37, **characterised in that** the lower body (43) is a housing and the upper body (44) is a housing lid which can be preassembled with one another by inserting the sleeve (10') into the bores on both sides.

39. Sleeve according to one of claims 1 to 38, **characterised in that** at least one bead (68) is arranged in the transitional region between the flange (13) and the cylindrical sleeve casing (15).

40. Sleeve according to claim 39, **characterised in that** the bead (68) is located substantially halfway along the tab (48) of the slotted flange (13).

## Revendications

1. Manchon de fixation, susceptible d'être introduit (19) dans un perçage (40) d'un ou plusieurs corps (43, 44) et y être appliqué sur toute sa surface, avec une enveloppe de manchon (15) cylindrique, monocouche, formée d'un matériau en tôle à épaisseur de tôle constante, fendue longitudinalement (16) et présentant des surfaces d'enveloppe intérieure et extérieure exemptes de saillie, les deux bords (17, 18) de la fente longitudinale, en cas d'utilisation (10') du manchon (10) dans le perçage (40), prenant appui l'un sur l'autre et produisant des efforts périphériques (53) s'étendant dans la direction périphérique de l'enveloppe de manchon (15), un champ à perforations (21), composé d'au moins deux rangées (22.1 à 22.3), parallèles entre elles, de passages (30) étant disposé dans l'enveloppe de manchon, dont une première rangée (22.1) est décalée longitudinalement par rapport à sa rangée de trou (22.2) voisine, faisant que l'enveloppe de manchon (15), d'une part, présente, entre des rangées de trous (22.1 à 22.3) voisines, des nervures longitudinale (41) continues, orientées transversalement aux efforts périphériques (53), et, d'autre part, entre des passages (30) successifs dans une rangée de trous (22.1 à 22.3), comprend des nervures transversales (42) s'étendant dans la direction des efforts périphériques (53) et s'achevant sur le passage (30) de la rangée de trous voisine, en cas d'utilisation (10') du manchon (10), les bords, opposés en direction périphérique, des passages (30) s'approchant les uns des autres et les nervures longitudinales (41), à l'intérieur de l'enveloppe de manchon (15), se déformant aux dépens de la largeur libre (32.1, 33.1) des passages (30), tandis que les nervures transversales (42) restent non déformées, faisant que le champ à perforations (21) présente l'élasticité d'un ressort, génère les efforts périphériques (53) et sert de segment de ressort, disposé à l'intérieur de la section transversale annulaire étroite de l'enveloppe de manchon (15) cylindrique, le manchon (10), outre le segment de ressort, présentant au moins un segment longitudinal (26, 27) non élastique en direction périphérique, ne présentant aucun passage (30) et servant de segment de ressort dans le manchon (10), et, en cas d'utilisation (10') du manchon (10), le segment de ressort supportant les efforts périphériques (53) provenant du segment de ressort et produisant des efforts de serrage (57) agissant radialement vers l'extérieur, pressant le manchon contre la paroi intérieure du perçage (40).

2. Manchon selon la revendication 1, **caractérisé en ce que** - abstraction faite de l'extrémité axiale du champ à perforations (21) - tous les passages (30) présentent sensiblement le même profil de trou (36).

3. Manchon selon la revendication 1 ou 2, **caractérisé en ce que** le décalage entre des rangées de trous (22.1 à 22.3) voisines est sensiblement de la moitié de la longueur de trou (31) d'un passage (30),
ce pourquoi le passage (30) d'une première rangée de trous (22.1) s'achève (35) sensiblement à l'endroit auquel le centre du passage (30) est disposé dans la rangée de trous (22.2) voisine.

4. Manchon selon l'une des revendications 1 à 3, **caractérisé en ce que**, en raccordement à chacun des deux bords (17, 18) de sa fente longitudinale (16), le manchon (15) présente une bande de bordure (27) chaque fois réalisée sous la forme de segment rigide.

5. Manchon selon la revendication 4, **caractérisé en ce que** la bande de bordure (27) présente une largeur plus petite que/égale à la largeur du segment de ressort (24).

6. Manchon selon la revendication 5, **caractérisé en ce que** le segment de ressort (24) est réalisé avec une largeur à peu près du double de celle de la bande de bordure (27).

7. Manchon selon l'une des revendications 3 à 6, **caractérisé en ce que**, entre deux segments de ressort (24), le manchon (10) présente une zone médiane (25) réalisée sous forme de segment rigide (26).

8. Manchon selon la revendication 7, **caractérisé en ce que** la zone médiane (25) est sensiblement diamétralement à l'opposé de la fente longitudinale (16) du manchon (10).

9. Manchon selon la revendication 7 ou 8, **caractérisé en ce que** la zone médiane (25) est d'une largeur faisant à peu près trois fois celle d'un segment de ressort (24).

10. Manchon selon l'une des revendications 1 à 9, **caractérisé en ce que** le passage ménagé dans le manchon (10) est réalisé sous forme de trou oblong (30).

11. Manchon selon la revendication 10, **caractérisé en ce que** le trou oblong (30) s'étend sensiblement dans la direction longitudinale du manchon (10).

12. Manchon selon la revendication 10 ou 11, **caractérisé en ce que** la longueur de trou (31) du trou oblong (30), dans la direction d'étendue du manchon, est plus grande que l'espacement (69) entre des rangées de trous (22.1, 22.2) voisines.

13. Manchon selon la revendication 12, **caractérisé en ce que** l'espacement (69) entre des rangées de trous (22.1, 22.2) voisines fait de 20 % à 50 % de la longueur de trou (31).

14. Manchon selon l'une des revendications 10 à 13, **caractérisé en ce que** la largeur (32.0) maximale du trou oblong (30) fait entre 5 % et 30 % de la longueur de trou (31).

15. Manchon selon l'une des revendications 10 à 14, **caractérisé en ce que** le trou oblong (30) présente un profil de trou (36) à forme irrégulière.

16. Manchon selon la revendication 15, **caractérisé en ce que** le trou oblong (30) présente, dans des tronçons différents, une largeur de trou (32.0, 33.0) différente.

17. Manchon selon la revendication 16, **caractérisé en ce que** le trou oblong (30) présente, en son centre (35), une largeur libre (33.0) plus petite que celle qu'il présente à ses deux extrémités de trou (34).

18. Manchon selon la revendication 17, **caractérisé en ce que** - par rapport à la largeur (32.0) maximale - la différence, entre la largeur de trou maximale (32.0) et minimale (33.0) du trou oblong (30) est située dans la fourchette comprise entre 10 % et 40 %.

19. Manchon selon l'une des revendications 16 à 18, **caractérisé en ce que** le profil de trou (36) du trou oblong (30) présente à peu près une forme en profil d'os, composé de deux bords longitudinaux (37.0, 38.0) s'étendant l'un vers l'autre avec une forme convexe, s'étendant dans la direction longitudinale du manchon (10) et enfermant entre eux le trou oblong (30), et de bords d'extrémité (39) concaves, délimitant le trou oblong (30) aux deux extrémités (34) et s'étendant dans la direction périphérique du manchon (10).

20. Manchon selon l'une des revendications 1 à 19, **caractérisé en ce que** les nervures longitudinales (41), entre des rangées de trous (22.1 à 22.3) voisines, présentent une allure en forme de S, dont la forme en S devient plus ventrue lorsque les efforts périphériques (53) augmentent.

21. Manchon selon l'une des revendications 10 à 20, **caractérisé en ce que** le profil de trou oblong (36) est réalisé selon une symétrie à rabattement par rapport à son axe médian transversal orienté dans la direction longitudinale du manchon (10) et/ou par rapport à son axe médian transversal orienté dans la direction périphérique du manchon (10).

22. Manchon selon l'une des revendications 1 à 21, **caractérisé en ce que** le manchon (10) est certes cylindrique, mais va en s'effilant de manière conique, à son tronçon initial (11) orienté dans la direction d'insertion (19).

23. Manchon selon la revendication 22, **caractérisé en ce que** le tronçon conique (11) du manchon (10) est pratiquement exempt de passages et forme une zone annulaire conique.

24. Manchon selon la revendication 23, **caractérisé en ce que** la fente longitudinale (16) du manchon (10) est élargie dans la région de la zone annulaire conique (11), et **en ce que**, en cas d'utilisation (10'), les deux bords (17, 18) de la fente longitudinale (16) enclosent entre eux une découpure (14, 14) dans la région de la zone annulaire conique (11) et veillent à assurer une élasticité radiale de la zone annulaire conique (11).

25. Manchon selon l'une des revendications 1 à 24, **caractérisé en ce que**, à son extrémité située à l'arrière lors de l'insertion dans le trou de perçage, le manchon (10) présente une bride (13), et **en ce que**, lors de l'insertion complète (10) du manchon, la bride (13) prend appui sur un épaulement extérieur (63) radial d'un corps (44) comprenant le perçage (40) servant à l'insertion (19) du manchon.

26. Manchon selon la revendication 25, **caractérisé en ce que**, entre la bride (13) et un champ à perforations (21) muni de passages (30), le manchon (10) présente une zone d'extrémité annulaire (28) ne comprenant aucun passage.

27. Manchon selon la revendication 26, **caractérisé en ce que** la zone d'extrémité annulaire (28) présente une hauteur axiale plus grande que/égale à la largeur d'un champ à perforations (21).

28. Manchon selon l'une des revendications 25 à 27, **caractérisé en ce que** la bride (13) est formée, grâce à des intervalle radiaux (49), en un groupe de pattes (48) radiales et les intervalles produisent une "bride fendue".

29. Manchon selon la revendication 28, **caractérisé en ce que** les pattes de la bride fendue (13) présentent un contour de patte de forme rectangulaire ou carrée.

30. Manchon selon la revendication 28 ou 29, **caractérisé en ce que** les pattes (48) sont cintrées (67) par zones (65).

31. Manchon selon la revendication 30, **caractérisé en ce que** les cintrages (67) des pattes (48) ressortent, vers le haut et/ou vers le bas, du plan (66) de la bride fendue (13).

32. Manchon selon la revendication 31, **caractérisé en ce que** les cintrages (67) des pattes (48) sont produits par un repli en au moins une de leurs zones radiales (65).

33. Manchon selon l'une des revendications 1 à 32, **caractérisé en ce que** l'intérieur (56) du manchon (10) est libre et sert de logement à enfichage pour une tige (61).

34. Manchon selon la revendication 33, **caractérisé en ce que** la tige (61) traverse l'intérieur (56) de manchon et sert de moyen de fixation entre deux corps (43, 44).

35. Manchon selon la revendication 34, **caractérisé en ce que** la tige (61) appartient à une vis (60), présentant, à une extrémité, un filetage de vis et, à l'autre extrémité, une tête de vis (62), et **en ce que** la tige (61), par son filetage de tige, est susceptible d'être enfiché (19) dans une partie de perçage (59) d'un premier corps inférieur (43) et d'y être bloqué par vissage, **en ce que** la tige (61) traverse une première partie de perçage (58) d'un deuxième corps supérieur (44) et est alignée avec la première partie de parçage (58), **en ce que** le manchon (10) inséré s'étend au moins dans un tronçon avant de la deuxième partie de perçage (59) et sert de fixation provisoire entre les corps supérieur et inférieur (43, 44), **en ce que** la vis (60), dont la tige (61) traverse l'intérieur (56) de manchon, provoque une fixation ultime entre les corps inférieur et supérieur (43, 44), et **en ce que**, lorsque la vis (60) est bloquée par serrage, la tête de vis (62) prend appui sur un épaulement extérieur (63) radial du corps supérieur (44).

36. Manchon selon la revendication 35, **caractérisé en ce que** la bride (13) du manchon (10) sert de rondelle intercalaire entre l'épaulement extérieur (63) radial et la tête de vis (62).

37. Manchon selon l'une des revendications 32 à 36, **caractérisé en ce que** la bride fendue (13), munie de replis (67) à ses pattes de bride (48), sert de bague élastique entre l'épaulement extérieur (63) radial du corps supérieur (44) et la tête de vis (62) de la vis (60) et sert de sécurité à la vis (60).

38. Manchon selon l'une des revendications 35 à 37, **caractérisé en ce que** le corps inférieur (43) est un boîtier et le corps supérieur (44) est un couvercle de boîtier, susceptibles d'être prémontés ensemble, par insertion du manchon (10') dans les perçages situés de part et d'autre.

39. Manchon selon l'une des revendications 1 à 38, **caractérisé en ce qu'**au moins une moulure (68) est disposée dans la zone de transition entre la bride (13) et l'enveloppe de manchon (15) cylindrique.

40. Manchon selon la revendication 39, **caractérisé en ce que** la moulure (68) se trouve sensiblement dans l'axe longitudinal de la patte (48) de la bride fendue (13).
